# EUROPÄISCHE PATENTANMELDUNG

(11) **EP 4 180 791 A1**
(43) Veröffentlichungstag der Anmeldung: **17.05.2023**
(21) Anmeldenummer: 21207576.6
(22) Anmeldetag: 10.11.2021
(51) Int. Cl.: G01M 3/04, E04D 13/00, G01D 21/02, G01M 3/16

(54) **SENSORANORDNUNG**

(71) Anmelder: SFS Group International AG, 9435 Heerbrugg (CH)
(72) Erfinder: Borsboom, Lucas, Roermond (NL); Peeters, Mark, Nattenhoven (NL)

(57) **Zusammenfassung**

Eine Sensoranordnung wird vorgeschlagen zur Erkennung und Messung von Umweltparametern, insbesondere in Flachdachaufbauten. Sie umfasst eine erste Gruppe von Funktionseinheiten mit mindestens einem Sensor sowie einer Sende/Empfangsantenne für drahtlose Kommunikation sowie eine zweite Gruppe von Funktionseinheiten mit mindestens einem Sensor, einer Mess-, Speicher und Auswerteeinheit sowie einer Energieversorgung. Die beiden Gruppen von Funktionseinheiten sind in separaten Gehäusen untergebracht, aber miteinander wirkverbunden.

Die erste funktionelle Gruppe umfasst bevorzugt einen Sensor für Wasser in flüssiger Form und einen Feuchtesensor, die zweite funktionelle Gruppe mindestens einen Flächendruck-Sensor.

Ein Messnetz umfasst eine Gruppe von Sensoranordnungen, die von einer gemeinsamen Sende/Empfangseinheit aus gesteuert / überwacht werden. Beschrieben ist ebenfalls die Montage eines solchen Messnetzes.

## Beschreibung

Die vorliegende Erfindung befasst sich mit einer Sensoranordnung zur Erkennung und Messung von Umweltparametern und Erkennung von Schäden im Dachbereich von Gebäuden, insbesondere bei Flachdächern.

### HINTERGRUND

Im Bauwesen sind im zunehmenden Masse hochkomplexe Gebäudehüllen im Einsatz, die aus mehrlagigen, funktionell abgestimmten Schichten bestehen. Dabei werden sowohl bei Aussenwand wie auch Dachkonstruktionen Kombinationen von thermischen Isolationsschichten, tragenden/fixierenden Elementen und Schutzmembranen gegen Umwelteinflüsse wie Wind, Regen, Schnee etc. eingesetzt. Kombinationen von Mineralfaserprodukten, Schaumstoffen, Kunststofffolien und punktförmigen Befestigungselementen dafür sind speziell bei Dachaufbauten heute üblich.

Solche Gebäudehüllen dauerhaft dampf- und wasserdicht zu halten, erfordert nicht nur eine abgestimmte Auswahl von Produkten, sondern auch hohe Sorgfalt bei der Verarbeitung und Montage. Bei Industriedächern mit teilweise Tausenden von Quadratmetern, wo Hunderte von Metern an Schweissnähten zwischen Kunststofffolienbahnen anfallen können, sind die Anforderungen besonders hoch. Erschwerend kommt hinzu, dass die zunehmend dicken Isolationslagen je nach Material Wasser aufnehmen können, was dazu führt, dass eventuelle Leckagen erst spät entdeckt werden können und dann der entstandene Schaden bereits hoch ist.

### STAND DER TECHNIK

Es sind im Stand der Technik verschiedene Lösungen für dieses Problem beschrieben. Zum einen werden Detektionsverfahren für Leckagen eingesetzt, die auf verschiedenen Diagnosemethoden beruhen. Es gibt elektrische Verfahren, bei denen in der Unterkonstruktion bzw. im Dachaufbau ein Geflecht von Leitungen eingebracht wird. Nach lokalen Wassereinbrüchen werden Leckströme messbar, weil sich die elektrische Isolationswirkung des Dachaufbaus verändert. Alternativ können Dichtheitsmessungen mit Überdruck erfolgen oder über bildgebende Thermografie, weil beispielsweise durch eine Leckage eine Wärmebrücke entsteht. Allen Verfahren gemein ist ein hoher Aufwand bei der Anwendung bzw. bei der Installation.

Ein gemeinsames Problem aller solcher Umwelt-Überwachungssysteme liegt darin, welche, wie und wann die gesammelten Daten zu übertragen sind, unter anderem anhand folgender Kriterien: Messintervalle, Speicherung der Daten auf Abruf; kontinuierliche, periodische oder diskontinuierliche Überwachung auf Abruf, aktive Alarmierung bei Auftreten eines Schadens. Die Art und Weise, wie ein solches System ausgelegt wird, beeinflusst wesentlich die Anschaffungs-, Installations- und Betriebskosten.

Im Idealfall wird ein solches System so ausgelegt, dass es sowohl aktiv Daten senden kann (alarmieren), wie auch auf Anfrage. Es ist vorteilhaft, wenn dazu die überwachte Gebäudefläche nicht betreten werden muss, sondern eine kabellose Überwachung möglich ist. Dazu ist es erforderlich, die Sensorik selbst wie auch deren Energieversorgung sowohl robust wie auch stromsparend und langlebig auszulegen.

Bekannte Systeme mit RFID-gekoppelten Sensoren verwenden ein als Transponder bezeichnetes Halbleiterbauelement mit einer Antenne und ein dazu passendes Lesegerät. Solche RFID-Systeme haben den Vorteil, dass über die Antenne nicht nur die Identifikation des Transponders erfolgt, sondern auch die Energieversorgung via magnetische Wechselfelder oder durch hochfrequente Radioimpulse (Induktion). Diese Energieversorgung reicht aus, um einfache Sensoren zu betreiben. Kombiniert mit nicht-flüchtigen Speichern lassen sich so Messnetze aufbauen, die ohne Verkabelung und eigene Stromversorgung auskommen können. Dieser Vorteil wird aber mit dem Nachteil erkauft, dass ein Lesegerät der RFID-Antenne sehr nahe kommen muss.

Eine mit RFID versehene Tülle als Teil eines Befestigungselementes für eine Gebäudehülle wird durch die EP 3 366 931 beschrieben. Die Tülle lässt sich am ehesten als Rohrstück beschreiben mit einer flachen, scheibenförmigen Kopfverbreiterung an einem Ende und einer als Konus ausgebildeten Spitze am anderen. Die Tülle nimmt eine Sensoranordnung auf, mit zumindest einem RFID Transponder mit Antenne und einen mit dem Transponder verbundenen Sensor.

Die Schrift JP 2015-215226 A zeigt eine Überwachungsvorrichtung (state detection device), die dafür ausgelegt ist, einen Zustand zu überwachen. Konkret wird eine, in eine äussere Struktur einschraubbare, schraubenähnliche Hülse vorgeschlagen, die in ihrem Inneren eine Sensoranordnung aufweist. Die zugehörige Kommunikationsantenne wird im Kopf der Vorrichtung untergebracht wird. Es wird beschreiben, dass der eigentliche Sensor (probe electrode 11a) in der Spitze untergebracht ist und auch aus einer Öffnung dort vorstehen darf und mit der umliegenden Struktur in Kontakt treten kann.

Die koreanische Offenlegungsschrift KR 20070092374 A beschreibt eine als Nagel geformte Vorrichtung (Geo-Informationspunkt) mit einer elektronischen Plakette, die in einen Untergrund eingebracht_werden kann. Sie wird drahtlos ausgelesen und erlaubt so den Zugriff auf eine Datenbank mit Informationen über die Umgebung, z.B. Leitungen im Untergrund. Es wird vorgeschlagen RFID-Technologie zu nutzen.

Im Zusammenhang mit der weiter unten beschriebenen Erfindung sei unter dem Begriff Sensor ein Messgerät oder Fühler zum Erfassen einer physikalischen Grösse (wie Temperatur, Druck) oder eines Umweltparameters (Feuchtigkeit, Wasserstand) gemeint. Eine Sensoranordnung umfasst neben einem Sensor auch die zu dessen Betrieb notwendige Peripherie wie z.B. Energiezufuhr, Speicher, Auswerte- und Übermittlungselektronik. Mit Messnetz wird im Folgenden eine räumliche Anordnung von Sensoranordnungen gemeint, die gemeinsam betrieben werden. Ein Messnetz muss dazu nicht mit identischen Sensoren bzw. identisch ausgestatteten Sensoranordnungen ausgestattet sein.

Ein Nachteil des Standes der Technik ist, dass bei drahtverbundenen Messnetzen die Kosten bei der Erstellung sehr hoch sind. Eine Beschädigung von Kabeln kann das komplette Versagen bzw. den Teilausfall eines solchen Messnetzes nach sich ziehen.

Die vorliegende Erfindung befasst sich mit diesem Problem und schlägt, basierend auf den Merkmalen des Hauptanspruchs 1, eine Lösung vor. Die beschriebenen Sensoranordnungen sind flexibel, robust und individuell autark.

Unteransprüche beschreiben weitere Varianten und Ausbaustufen der Erfindung.

### BESCHREIBUNG DER ERFINDUNG

Eine Sensoranordnung dient, wie oben beschrieben, zur Erkennung und Messung von Umweltparametern. Sie umfasst im Sinne der vorliegenden Erfindung eine erste Gruppe von Funktionseinheiten, darunter mindestens einen Sensor sowie eine Sende/Empfangsantenne für drahtlose Kommunikation. Eine zweite Gruppe von Funktionseinheiten umfasst mindestens einen Sensor, eine Mess-, Speicher und Auswerteeinheit sowie eine Energieversorgung.

Der Begriff "Gruppe von Funktionseinheiten" bedeutet, dass die angesprochenen Sensoren bzw. weiteren Baugruppen eine logische Wirkeinheit bilden. Sie können hierzu auf einem gemeinsamen PCB (printed circuit board, Platine) angeordnet sein oder diskret, aber wirkverbunden angeordnet. Kennzeichnend ist, dass die beiden funktionellen Gruppen in separaten Gehäusen untergebracht sind. Die beiden Gehäuse sind wiederum miteinander wirkverbunden.

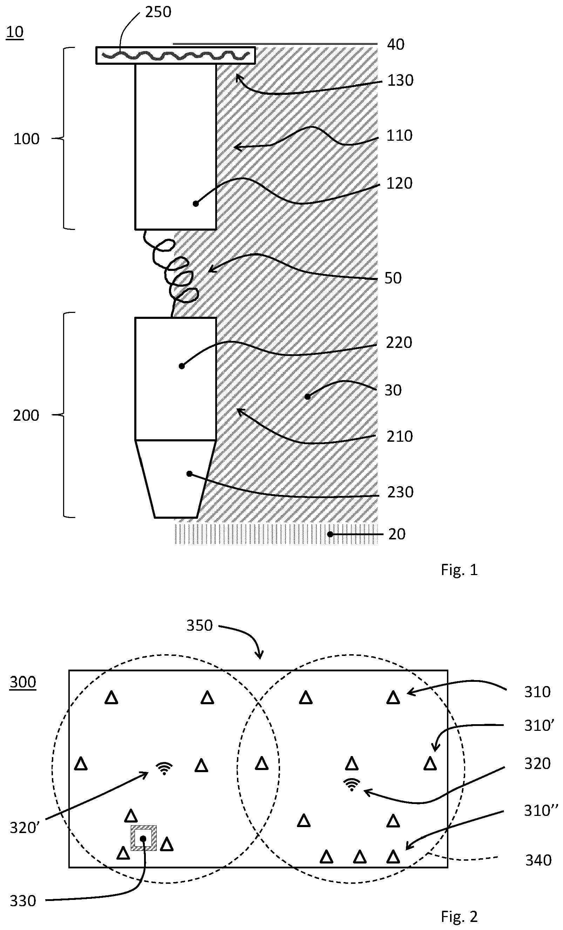

Beide Gruppen enthalten also Sensoren, aber die Energieversorgung ist jeweils der zweiten, die Sende/Empfangsantenne (diese Baugruppe darf auch Verstärkungs- und Signalwandlungsbauelemente umfassen) der ersten Gruppe zugeordnet. Der Grund für diese Verteilung der Baugruppen liegt im Vorteil bei der Anwendung begründet: Die zweite Baugruppe ist vorgesehen und dafür ausgelegt, tiefer in der Isolationsschicht eines Flachdachs verbaut zu werden als die erste (siehe Figur 1). In der temperaturstabileren, tieferen Isolationsschicht ist eine gleichbleibende Energieversorgung leichter zu realisieren als an einem Ort, der grösseren Temperaturschwankungen ausgesetzt ist. Die zweite funktionelle Gruppe ist exakt hierfür vorgesehen und ist daher mit der ersten Gruppe bevorzugt über ein Kabel wirkverbunden. Darüber lassen sich eine Energieversorgung von der ersten zur zweiten Gruppe sicherstellen und ebenso ein Informationsaustausch.

Die erste Gruppe wird in einer Anwendung wie oben beschrieben beispielsweise einen Sensor für Wasser in flüssiger Form und einen Feuchtesensor umfassen. Wiederum vom Einsatzzweck her betrachtet, wird ein Wassersensor an einem Punkt platziert, wo sich Wasser sammelt oder fliessen kann. Ein Feuchtesensor kann, selbst wenn noch kein angesammeltes Wasser detektiert werden kann, einen beginnenden Schaden anzeigen. Eine undichte Stelle eines Flachdachs wird unter Umständen feucht, sammelt aber nicht zwingend das eingetretene Wasser. Ein Ort mit angesammeltem Wasser muss umgekehrt nicht identisch mit der Stelle sein, wo das Wasser eintritt. So kann durch eine spezifische Kombination dieser Sensoren eine Vielzahl von Anwendungen abgedeckt werden. Dazu macht es Sinn, wenn das Gehäuse der zweiten funktionellen Gruppe ein oder mehrere Durchbrüche bzw. Öffnungen aufweist für die beschriebenen Sensoren. Die Dimensionen der Öffnungen werden vom Fachmann so gewählt werden, dass die Funktion des Sensors gewährleistet wird ohne die strukturelle Integrität des Gehäuses zu kompromittieren.

Ebenfalls für den beschriebenen Anwendungszweck, aber nicht nur für ihn, macht es Sinn, dass die zweite funktionelle Gruppe einen Flächendruck-Sensor umfasst. Ein Flächendruck-Sensor kann z.B. die Kompression einer Dachregion entdecken, die durch Windlasten entsteht. Eine besonders hilfreiche Anwendung entsteht, wenn der Flächendrucksensor nah an der Oberfläche flach unter einer Dachmembran angebracht wird. So kann z.B. bei Starkregen sich aufstauendes Wasser detektiert werden, wenn ein Dachabfluss verstopft. Oder eine durch Schnee, insbesondere Nassschnee sich aufbauende, kritische Dachbelastung. Wird eine Vielzahl von Sensoranordnungen verbaut, können ortsaufgelöst Problemzonen erkannt werden und Massnahmen zur Vermeidung bleibender Schäden eingeleitet werden. Flächendrucksensoren, die diese Funktion erfüllen können, sind bekannt und kommerziell erhältlich.

Die Minimalkonfiguration einer für den beschriebenen Anwendungszweck ausgelegten Sensoranordnung würde exakt diese Sensoren umfassen. Es können, zur Erweiterung der Überwachungsfähigkeiten weitere Sensoren hinzugefügt werden und in die Auswerte-/Mess- und Speicherlogik integriert werden. Als Beispiel zu nennen wären Thermosensoren, z.B. in im Sommer sehr heissen Regionen oder Erschütterungs-/Schwingungssensoren zur Detektion von Dachbewegungen bei Sturm.

Eine ohne weiteres denkbare Lösung kann auch darin bestehen, dass die beiden Gehäuse der ersten und zweiten funktionelle Gruppe durch Zusammenstecken entlang ihrer Längsachse formschlüssig verbunden werden können. Dadurch lassen sich einteilige Einheiten realisieren mit auf einen bestimmten Dachaufbau abgestimmten Gehäusedimensionen. Ein solches Zusammenstecken kann auch für den Transport und die Lagerung im unverbauten Zustand vorteilhaft sein.

Als Material für die beiden Gehäuse wird vorteilhaft Kunststoff gewählt, weil sich so die Gehäuse einfach und in grossen Stückzahlen herstellen lassen. Im Innenbereich der Gehäuse können Halterungen, Fixpunkte, Rastvorrichtungen, Kabelhalterungen für die einzubauenden Sensoren, Platinen bzw. sonstigen Bauteile vorgesehen werden. Das oben erwähnte Zusammenstecken lässt sich durch entsprechende Gestaltung der Gehäuseform auf bekannte Weise erzielen. Aus Stabilitätsgründen empfiehlt es sich die Gehäuse überwiegend hohlzylindrisch auszulegen, eine rechteckige Querschnittsform in Teilabschnitten ist aber auch nicht unmöglich. Wie bereits erwähnt, kann es notwendig sein, das Gehäuse mit Öffnungen in bestimmten Bereichen zu versehen, um Sensoren direktere Kommunikation mit der Umgebung zu ermöglichen. Um Beschädigung oder Funktionsbeeinträchtigung der Elektronik bzw. Energieversorgung zu vermeiden, können solche Bauteile wie Platinen separat verkapselt oder vergossen werden, um sie robuster werden zu lassen.

Zum Setzen der Gehäuse können Werkzeuge vorgesehen werden, um eine Öffnung in das Isolationsmaterial des Dachaufbaus einzubringen, die dem Durchmesser der Gehäuse entsprechen. Je nach Isolationsmaterial können dies Werkzeuge sein, die eine Öffnung nur einschneiden, ausbohren oder durch Verdrängen schaffen. Denkbar ist auch, dass die Gehäuse selbst, insbesondere das der zweiten Gruppe der Funktionseinheiten, mit einer Spitze versehen werden, die z.B. in faserigem Material durch Verdrängen einen Kanal schaffen kann. Auch hier wird ein Fachmann Werkzeuge vorsehen, mit denen das Setzen auch in Materialien, die dicker sind als die Gehäuse lang, ermöglicht wird.

Es ist nachvollziehbar, dass für so eine Sensoranordnung die Energieversorgung die kritische Grösse für Leistung und Lebensdauer ist. Wie im Abschnitt zum Stand der Technik angemerkt wurde, haben fest verdrahtete Sensoranordnungen dahingehend einen Vorteil und könnten auch die Informationsübermittlung via eine solche Kabelverbindung lösen. In einem Flachdach eines Industriebaus wären dafür aber unter Umständen Hunderte von Metern Kabel zu verlegen und im Dachaufbau geschützt unterzubringen. Die bedarfsgerechte Versorgung via eine RFID Antenne wäre theoretisch von der Lebensdauer unbegrenzt, muss aber zum Auslesen individuell angesprochen bzw. adressiert werden. Ein Messnetz lässt sich ohne weitere Komponenten nicht realisieren. Daher wird bevorzugt eine Sensoranordnung mit einer Energieversorgung realisiert, die auf eine Batterie mit einer Lebensdauer von mehr als 20 Jahren zurückgreift. Diese sind kommerziell erhältlich. In Verbindung mit modernen, stromsparenden Elektronik-Komponenten und einem intelligenten Mess-, Verarbeitungs- und Übermittlungskonzept lassen sich solche Lebensdauern erzielen.

Wie mehrfach erwähnt, liegt der Hauptanwendungszweck der vorgestellten Sensoranordnungen in der Isolationsschicht eines Flachdaches. Dieses wird in einfachster Ausführung mindestens eine statisch tragfähigen Decke (Trapezbleche aus Stahl, Beton, Holz), eine darüber angeordnete Isolationsschicht und eine die Isolationsschicht zur Umgebung abschliessenden Dachfolie umfassen (im fertig verbauten Zustand). Die Montage würde, in den nachfolgend aufgeführten Schritten erfolgen. Dabei sind diese Schritte als Eckpunkte zu verstehen, die zeitlich nacheinander beschrieben sind, aber durch weitere Zwischenschritte zur Qualitätssicherung, Reparatur etc. unterbrochen bzw. ergänzt werden können. Wenn einzelne Schritte in der Abfolge nicht zwingend sind, sei eine angepasste Reihenfolge äquivalent mitumfasst.

Die Schritte sind folgende:
a) Bereitstellen eines Flachdachs mit einer Isolationsschicht;
b) Bereitstellen einer Anzahl zu montierenden Sensoranordnungen;
c) Einbringen einer Öffnung in die Isolationsschicht an vorgegebener Stelle des Flachdachs durch Vorformen, Einschneiden, Verdrängen, Bohren oder Ausschneiden bzw. Ausstanzen. Dies richtet sich nach der Art des Isolationsmaterials und würde nach den entsprechenden Richtlinien erfolgen.
d) Einsetzen einer Sensoranordnung in die zylindrische Öffnung durch Einführen des Gehäuses der zweiten funktionellen Gruppe bis in eine vordefinierte bzw. vorgegebene Tiefe. Je nach Sensorausstattung würde dieser Einschub von Hand erfolgen oder auch mit entsprechenden Werkzeugen.
e) Einschieben des Gehäuses der ersten funktionellen Gruppe in dieselbe Öffnung bis deren vordefinierte Lage erreicht ist. Beide Gehäuse liegen damit bevorzugt in ein und derselben Öffnung vertikal übereinander. Alternativ könnte auch ein seitlicher Versatz, je nach Vorgabe und Anwendung, vorgesehen werden.
f) Wiederholung der Schritte c) bis f) bis alle vorgesehenen Sensoranordnungen verbaut sind;
g) Auflegen und Befestigen einer Dachfolie. Dieser Vorgang ist im Stand der Technik bekannt, ebenso die anzuwendenden Folien bzw. Dachmembranen je nach lokalen Bauvorschriften bzw. Vorgaben des Herstellers.

Wie oben beschrieben, kann in Schritt d) das Gehäuse mit der zweiten funktionellen Gruppe nahe oder in Kontakt mit der Decke und in Schritt e) das Gehäuse der ersten funktionellen Gruppe nahe bzw. an der nach aussen bzw. oben weisenden Oberfläche der Isolationsschicht angebracht werden. Dies wird vorgenommen um die jeweilige Sensorausrüstung am vorgesehenen Platz anzubringen.

Insbesondere kann dasjenige Ende des Gehäuses der ersten funktionellen Gruppe, welches nahe der Oberfläche der Isolationsschicht eingebracht wurde, bündig mit der Oberfläche der Isolationsschicht abschliessen und nach Schritt g) in direktem Kontakt mit der Dachfolie stehen. Dies ist besonders vorteilhaft für die Funktionalität des Flächendrucksensors.

Durch die Montage einer Vielzahl von Sensoranordnungen, wie oben beschrieben, sowie dem Einsatz von einer oder mehrerer Sende/Empfangsstation(en) zur Übermittlung von Daten und Instruktionen zwischen den Sensoranordnungen und der/den Sende/Empfangsstation(en) entsteht ein Messnetz. Die Sende- und Empfangsstationen müssen nicht im/am Dach angebracht sein, sondern können an einer für den Empfang vorteilhaften Stellen aufgestellt werden. Diese Sende- und Empfangsstationen können eine Energieversorgung via Kabel und eine eigene Datenverbindung aufweisen. Damit ist die Verbindung zu einer externen Meldestelle, einer Cloud-Anwendung oder einem anderen Messnetz denkbar.

Weiterhin kann das Messnetz mit einer rechnergestützte Auswerte-, Speicherungs- und Informationsaufbereitungseinheit ausgerüstet werden, die dafür ausgelegt ist, Daten der Sensoranordnungen aufzunehmen, zu bewerten, mit Soll- und Alarmwerten zu vergleichen und mittels hinterlegter Vorgaben Instruktionen an die Sensoranordnungen und/oder Anzeigevorrichtungen auszugeben.

### BESCHREIBUNG DER FIGUREN

Figur 1 zeigt eine Sensoranordnung 10 verbaut in einem Dachaufbau. Die erste funktionelle Gruppe 100 ist am oberen Bildrand in einer Isolationsschicht 30 eingebettet, knapp unterhalb einer Dachfolie 40. Die funktionelle Gruppe 100 ist untergebracht in einem Gehäuse 110, hier bestehend aus einem zylindrischen Rumpfteil 120 mit einem flachen, scheibenförmigen Kopf 130. Diese Form wurde gewählt, um einerseits zu gewährleisten, dass der Rumpfteil 120 definiert im oberen Teil der Isolationsschicht 30 verbleibt, weil der Kopf 130 als Anschlag beim Einstecken in die Isolationsschicht 30 wirkt. Zum anderen ist diese Form vorteilhaft, um einen Flächendrucksensor in den Kopf 130 geschützt einzubetten. Nicht zuletzt bietet die Fläche des Kopfes 130 zudem die Möglichkeit eine Antenne (angedeutet als 250) anzubringen.

Die funktionelle Gruppe 100 bzw. das Gehäuse 110 ist mit der zweiten funktionellen Gruppe 200 bzw. dem Gehäuse 210 wirkverbunden. Diese Verbindung ist dabei gewährleistet durch ein Verbindungskabel, hier als Spiralkabel 50 angedeutet. Dies erlaubt den Einsatz einer Sensoranordnung 10 in verschieden dicken Isolationsschichten 30. Das Gehäuse 210 besitzt ebenfalls einen zylindrischen Rumpfteil 220 und eine Spitze 230, die hier die Form eines Kegelstumpfs aufweist. Der Kegelstumpf wird hier an seiner Unterseite (bezogen auf die Zeichnung) in bevorzugter Ausführungsform eine Öffnung aufweisen, die in Richtung auf die Oberfläche der Decke 20 ("nach unten") weist. Dies hat den Vorteil, dass ein Sensor für Wasser an genau die Oberfläche angenähert werden kann, auf der sich Flüssigkeiten potentiell sammeln.

Figur 2 zeigt ein Messnetz 300 aus einzelnen Sensoranordnungen 310, 310', 310",... (kleine Dreiecke), die auf einem Dach 350 angeordnet sind. Der versenkte Einbau, wie in Figur 1 gezeigt, soll in dieser Vogelperspektive keine Rolle spielen. Erkennbar ist, dass die Sensoranordnungen 310 teils in regelmässigen Mustern, aber auch in dichteren Gruppen angeordnet sein können. Dies kann wegen der Aufgabe der Schadensüberwachung sinnvoll sein, um gefährdete Dachabschnitte engmaschiger überwachen zu können. So zeigt Figur 2 mehrere Sensoranordnungen 310 um ein Oberlicht 330 herum gruppiert. Unkritische Bereiche können dagegen ausgedünnt werden. In der Zeichnung sind zwei Basisstationen 320, 320' eingezeichnet. Beide haben einen Wirkungskreis 340, der mehrere Sensoranordnungen umfasst. In diesem Wirkungskreis können zwischen den Sensoranordnungen 310, 310',... und den Basisstationen 320, 320' Daten empfangen und gesendet werden. Die Reichweite wird von den verwendeten Sende/Empfangssystemen abhängen, den lokalen Gegebenheiten und einer etwaigen Überdeckung der Sensoren durch Schnee oder anderes Material.

## Patentansprüche

1. Sensoranordnung (10) zur Erkennung und Messung von Umweltparametern, umfassend:
- eine erste Gruppe von Funktionseinheiten (200) mit mindestens einem Sensor sowie einer Sende/Empfangsantenne (250) für drahtlose Kommunikation; und
- eine zweite Gruppe von Funktionseinheiten (100) mit mindestens einem Sensor, einer Mess-, Speicher und Auswerteeinheit sowie einer Energieversorgung;
**dadurch gekennzeichnet, dass** die erste und die zweite Gruppe von Funktionseinheiten (100, 200) in separaten Gehäusen (110, 210) untergebracht, aber miteinander wirkverbunden sind.

2. Sensoranordnung (10) gemäss Anspruch 1, **dadurch gekennzeichnet, dass** die zweite Gruppe von Funktionseinheiten (200) einen Sensor für Wasser in flüssiger Form und einen Feuchtesensor umfasst.

3. Sensoranordnung (10) gemäss Anspruch 1-2, **dadurch gekennzeichnet, dass** die erste Gruppe von Funktionseinheiten (100) einen Flächendruck-Sensor umfasst.

4. Sensoranordnung (10) gemäss Anspruch 1-3, **dadurch gekennzeichnet, dass** die erste und zweite Gruppe von Funktionseinheiten (100, 200) über ein Kabel (50) wirkverbunden sind.

5. Sensoranordnung (10) gemäss Anspruch 1-4, **dadurch gekennzeichnet, dass** die Gehäuse (110, 210) der ersten und zweiten Gruppe von Funktionseinheiten (100, 200) durch Zusammenstecken entlang ihrer Längsachse formschlüssig verbunden werden können.

6. Sensoranordnung (10) gemäss Anspruch 1-5, **dadurch gekennzeichnet, dass** die Energieversorgung durch eine Batterie mit einer Lebensdauer von mehr als 20 Jahren gewährleistet wird.

7. Sensoranordnung (10) gemäss Anspruch 1-6, **dadurch gekennzeichnet, dass** das Gehäuse (210) der zweiten Gruppe von Funktionseinheiten (200) ein oder mehrere Durchbrüche bzw. Öffnungen aufweist für Sensoren.

8. Montage von Sensoranordnungen (10) nach den Ansprüchen 1 bis 7 in der Isolationsschicht (30) eines Flachdaches (350), wobei das besagte Flachdach (350) mindestens eine statisch tragfähigen Decke (20) und eine darüber angeordnete Isolationsschicht (30) umfassen soll, **mit folgenden Schritten:**
a) Bereitstellen eines Flachdachs mit einer Isolationsschicht (30);
b) Bereitstellen einer Anzahl zu montierenden Sensoranordnungen (10);
c) Einbringen einer Öffnung in die Isolationsschicht (30) an vorgegebener Stelle des Flachdachs durch Vorformen, Einschneiden, Verdrängen, Ausbohren oder Ausschneiden bzw. Ausstanzen;
d) Einsetzen einer Sensoranordnung in die zylindrische Öffnung durch Einführen des Gehäuses (210) der zweiten Gruppe von Funktionseinheiten (200) bis in eine vordefinierte bzw. vorgegebene Tiefe;
e) Einschieben des Gehäuses (100) der ersten Gruppe von Funktionseinheiten (100) in dieselbe Öffnung bis deren vordefinierte Lage erreicht ist;
f) Wiederholung der Schritte c) bis f), bis alle vorgesehenen Sensoranordnungen verbaut sind.

9. Montage nach Anspruch 8, **dadurch gekennzeichnet, dass** weiter ein Schritt g) erfolgt mit Auflegen und Befestigen einer Dachfolie (40).

10. Montage nach Anspruch 8-9, **dadurch gekennzeichnet, dass** in Schritt d) das Gehäuse (210) der zweiten Gruppe von Funktionseinheiten (200) nahe oder in Kontakt mit der Decke (20) und in Schritt e) das Gehäuse (110) der ersten Gruppe von Funktionseinheiten (100) nahe bzw. an der nach aussen bzw. oben weisenden Oberfläche der Isolationsschicht (30) angebracht wird.

11. Montage nach Anspruch 10, **dadurch gekennzeichnet, dass** dasjenige Ende des Gehäuses (110) der ersten Gruppe von Funktionseinheiten (100), welches nahe der Oberfläche der Isolationsschicht (30) eingebracht wurde, bündig mit der Oberfläche der Isolationsschicht (30) abschliesst und nach Schritt g) in direktem Kontakt mit der Dachfolie (40) ist.

12. Messnetz (300) umfassend eine Mehrzahl von Sensoranordnungen (10, 310, 310', ..) gemäss Anspruch 1-7, montiert in der Isolationsschicht (30) eines Flachdachs (350) nach dem Montageverfahren gemäss Anspruch 8-11, ferner umfassend eine oder mehrere Sende/Empfangsstation(en) (320, 320') zur Übermittlung von Daten und Instruktionen zwischen den Sensoranordnungen (10, 310, 310', 310") und der/den Sende/Empfangsstation(en) (320, 320').

13. Messnetz (300) gemäss Anspruch 12, weiterhin umfassend eine rechnergestützte Auswerte-, Speicherungs- und Informationsaufbereitungseinheit, die dafür ausgelegt ist, Daten der Sensoranordnungen aufzunehmen, zu bewerten, mit Soll- und Alarmwerten zu vergleichen und mittels hinterlegter Vorgaben Instruktionen an die Sensoranordnungen und/oder Anzeigevorrichtungen auszugeben.
